# EUROPÄISCHE PATENTSCHRIFT

(11) **EP 1 884 469 B1**
(45) Veröffentlichungstag und Bekanntmachung des Hinweises auf die Patenterteilung: **29.07.2009**
(21) Anmeldenummer: 07405204.4
(22) Anmeldetag: 13.07.2007
(51) Int. Cl.: B65B 51/30, B65B 61/10, B29C 65/02

(54) **Werkzeug zum Verschweissen und Trennen von kontinuierlich geförderten Folien aus einem thermoplastischen Material**
Tool for welding and separating continuously conveyed films made of a thermoplastic material
Outil destiné au soudage et à la séparation de feuilles alimentées en continu à partir d'un matériau thermoplastique

(30) Priorität: 02.08.2006 CH 12442006
(43) Veröffentlichungstag der Anmeldung: 06.02.2008
(73) Patentinhaber: Ferag AG, 8340 Hinwil (CH)
(72) Erfinder: Tremp, Marcel, 8400 Winterthur (CH)
(74) Vertreter: Frei Patent Attorneys

(56) Entgegenhaltungen:
- EP-A1- 0 941 933
- WO-A-20/05118402
- US-A- 3 035 381
- US-A- 5 247 779

## Beschreibung

Die Erfindung liegt auf dem Gebiete der Verpackungstechnik und betrifft ein Werkzeug nach dem Oberbegriff des unabhängigen Patentanspruchs. Das Werkzeug dient zum Verschweissen und Trennen von kontinuierlich geförderten Folien aus einem thermoplastischen Material.

Bekannte Beispiele von Vorrichtungen, in denen Werkzeuge der genannten Art zur Anwendung kommen, werden beispielsweise eingesetzt zur Bearbeitung eines Folienschlauches, der durch Längsverschweissung aus mindestens einer quasi endlosen Bahn einer Kunststofffolie (z.B. aus Polyethylen oder Polypropylen) in einem kontinuierlichen Verfahren erstellt wird und in dem hintereinander und voneinander beabstandet flache Gegenstände angeordnet sind. Die genannte Bearbeitung besteht darin, den Folienschlauch zwischen den Gegenständen quer zu verschweissen und unmittelbar nach der Verschweissung oder im wesentlichen gleichzeitig damit zu durchtrennen, sodass durch jeden Verschweiss- und Trennschritt ein Gegenstand individuell verpackt wird.

Mit den genannten Vorrichtungen werden beispielsweise einzelne Druckprodukte wie Zeitungen oder Zeitschriften oder kleine Stapel von Druckprodukten in meist transparente Kunststofffolien verpackt. Es ist aber durchaus auch möglich, mit entsprechend angepassten solchen Vorrichtungen andere Gegenstände in derselben Art und Weise zu verpacken oder auch durch Querverschweissung und Trennung von aufeinanderliegenden Folienbahnen einzelne leere Tüten herzustellen.

In den genannten Vorrichtungen werden die Folien für die Querverschweissung und Trennung üblicherweise zwischen einem geheizten Werkzeug und einem Gegenwerkzeug gehalten, wobei die beiden Werkzeuge über eine üblicherweise kurze Strecke zusammen mit den Folien bewegt werden. Die Vorrichtungen weisen dazu meist eine Mehrzahl von Werkzeugen und eine Mehrzahl von Gegenwerkzeugen auf, die gegenläufig umlaufend und miteinander synchronisiert angeordnet sind, derart, dass sich Werkzeuge und Gegenwerkzeuge unmittelbar vor der Schweissstrecke von beiden Seiten gegen die Folien bewegen, während ihrer Bewegung auf der Schweissstrecke gegeneinander gepresst werden und sich unmittelbar nach der Schweissstrekke von den Folien weg bewegen. Die Umlaufbahnen von Werkzeugen und Gegenwerkzeugen sind dabei oft kreisförmig, können aber auch andere Formen haben.

Die Werkzeuge sind balkenförmig und erstrecken sich über die Breite der zu verschweissenden und zu trennenden Folien. Vorteilhafterweise sind die Werkzeuge nicht nur für das Schweissen und das Trennen sondern auch für ein Niederhalten der Folien ausgerüstet, dies insbesondere dann, wenn die miteinander zu verschweissenden Folienlagen, bevor sie zwischen Werkzeug und Gegenwerkzeug eingeklemmt werden, einen relativ grossen Abstand voneinander haben. Die Werkzeuge weisen also beispielsweise drei Elemente auf, die vorteilhafterweise senkrecht zu den zu verschweissenden Folien relativ zueinander bewegbar sind. Dabei ist entweder das zentrale Element als Trennelement ausgerüstet und die in Förderrichtung der Folien vor und nach dem Trennelement angeordneten Elemente sind heizbar und dienen zur Niederhaltung und Schweissung oder das zentrale Element ist heizbar und dient gleichzeitig als Schweiss- und als Trennelement, während die Elemente vor und nach dem Trenn/Heizelement nur als Niederhalter dienen.

Ein Beispiel einer Vorrichtung der genannten Art ist beschrieben in der Publikation WO 2005/118402. Diese Vorrichtung weist eine Mehrzahl von Werkzeugen auf, die im wesentlichen aus einem SchweisslTrennelement und vorteilhafterweise beidseitig davon angeordneten Niederhaltern bestehen, wobei die Niederhalter relativ zum Schweiss/Trennelement senkrecht zu den Folien federnd angeordnet sind. Als Gegenwerkzeug ist ein geeignet beschichtetes Förderband vorgesehen, das durch den Druck der Schweiss/Trennelemente während der Schweissung und Trennung leicht ausgelenkt wird. Die Schweiss/Trennelemente weisen zwei geheizte Schweissflächen auf, die einen stumpfen Winkel bildend aufeinander zu laufen und eine Trennkante bilden. Die Schweissflächen weisen in Förderrichtung eine Breite von ca. 0,5 bis 1 cm auf.

Die oben kurz beschriebenen Schweiss/Trennelennente weisen üblicherweise einen Stahlbalken mit Keramikkern auf. Sie verbrauchen viel Heizenergie (gemäss WO 2005/118402 ca. 500 W pro Balken), sind aufwändig in der Herstellung und sind relativ schwer.

Ein Werkzeug gemäss dem Oberbegriff von Anspruch 1 istausderUS 3,035,381 bekannt.

Die Erfindung stellt sich nun die Aufgabe, ein Werkzeug der genannten Art zu schaffen, mit dem die genannten Querverschweissungen und Trennungen von Folien insbesondere mit einem Förderband als Gegenwerkzeug ebenso zuverlässig durchführbar sind wie mit den oben kurz beschriebenen Werkzeugen, wobei das erfindungsgemässe Werkzeug aber weniger aufwändig in der Herstellung sein soll und es möglich machen soll, Energie einzusparen und trotzdem hohe Stückleistungen zu erzielen. Das erfindungsgemässe Werkzeug soll insbesondere geeignet sein für eine Anwendung in der Vorrichtung, wie sie in der Publikation WO 2005/118402 beschrieben ist, kann aber selbstverständlich auch in anderen Vorrichtungen, die demselben Zwecke dienen zur Anwendung kommen.

Diese Aufgabe wird gelöst durch das Werkzeug, wie es im unabhängigen Patentanspruch definiert ist.

Das erfindungsgemässe Werkzeug basiert auf dem Befund, dass die Schweissflächen, die in den bekannten Schweiss/Trennelementen an der Trennkante zusammenlaufen, dann, wenn sie mit einem Förderband oder einem entsprechend ausgerüsteten Gegenwerkzeug zusammenwirken, nur in der unmittelbaren Umgebung der Trennkante, also nur zu einem kleinen Teil ihrer Breite auf die Folien wirken und aus diesem Grunde bedeutend schmaler sein können.

Das erfindungsgemässe Werkzeug ist deshalb nicht wie bekannte Werkzeuge als Balken ausgebildet sondern besteht aus einer Mehrzahl von dünnen Schichten, die sandwichartig aneinander liegen, z.B. parallel zueinander, wobei die beiden äussersten Schichten durch ein gefaltetes Blech vorteilhafterweise aus rostfreiem Stahl gebildet sind und die Faltkante als Trennkante dient. Zwischen den beiden durch die Faltkante getrennten Teilen dieses Mantelblechs ist ein Heizelement untergebracht, das einen ebenfalls flachen und dünnen Träger aus einem elektrisch isolierenden Material und einen um den Träger gewickelten Heizdraht aufweist. Das mehrschichtige Werkzeug hat die Form eines Schwertes mit einer Dicke, die beispielsweise 2 mm oder sogar weniger sein kann. Der äussere Biegeradius des Mantelbleches beträgt beispielsweise 1 mm oder weniger.

Es zeigt sich, dass das erfindungsgemässe Werkzeug, das in einem sehr einfachen Verfahren herstellbar ist, bedeutend leichter ist als die bekannten Werkzeuge, die demselben Zwecke dienen, wodurch deren Umlaufbetrieb mit einfacheren Mitteln und mit weniger Energie aufrechterhalten werden kann. Es zeigt sich auch, dass bei Verwendung des erfindungsgemässen Werkzeuges die für die Schweissung und Trennung der Folien notwendige Heizenergie relevant kleiner ist, als dies für bekannte Werkzeuge der Fall ist. Ein weiterer relevanter Vorteil des erfindungsgemässen Werkzeuges besteht darin, dass es durch seine geringe Breite fähig ist, Querverschweissung und Trennung vorzunehmen, wenn die Abstände zwischen den einzuschweissenden Gegenständen sehr klein sind, und zwar auch dann, wenn die Gegenstände eine relevante Dicke von beispielsweise einigen Zentimetern aufweisen. Es ist tatsächlich möglich, mit dem erfindungsgemässen Werkzeug beispielsweise Zeitschriften einzuschweissen, die mit Abständen von nur 4 bis 5 mm voneinander gefördert werden. Derart kleine Abstände zwischen den einzuschweissenden Gegenständen bewirken, dass eine mit erfindungsgemässen Werkzeugen ausgerüstete Vorrichtung bei gleicher Fördergeschwindigkeit eine höhere Stückleistung erbringen kann als eine mit bekannten Werkzeugen ausgerüstete Vorrichtung oder für eine gleiche Stückleistung mit einer kleineren Fördergeschwindigkeit betrieben werden kann. Es bedeutet zusätzlich auch eine Einsparung an Folienmaterial.

Das erfindungsgemässe Werkzeug ist vorteilhafterweise beidseitig mit Niederhalteelementen ausgerüstet, die relativ zum zentral angeordneten Schweiss/Trennelement senkrecht zur zu bearbeitenden Folie federnd mit diesem verbunden sind, wie dies in der oben bereits erwähnten Publikation WO 2005/118402 beschrieben ist. Es ist auch möglich, nur ein Niederhalteelement vorzusehen.

Eine bevorzugte Ausführungsform des erfindungsgemässen Werkzeugs zur Verschweissung und Trennung von kontinuierlich geförderten Folien aus einem thermoplastischen Material wird im Zusammenhang mit den folgenden Figuren im Detail beschrieben. Dabei zeigen:
- Figur 1: eine Ansicht des Werkzeuges mit Blickwinkel parallel zur Förderrichtung der zu bearbeitenden Folien;
- **Figur 2**: einen Querschnitt durch das erfindungsgemässe Werkzeug;
- **Figur 3**: eine teilweise explodierte Darstellung des erfindungsgemässen Werkzeugs;
- **Figur 4**: eine weitere Ausführungsform der Trennkante des erfindungsgemässen Werkzeugs.

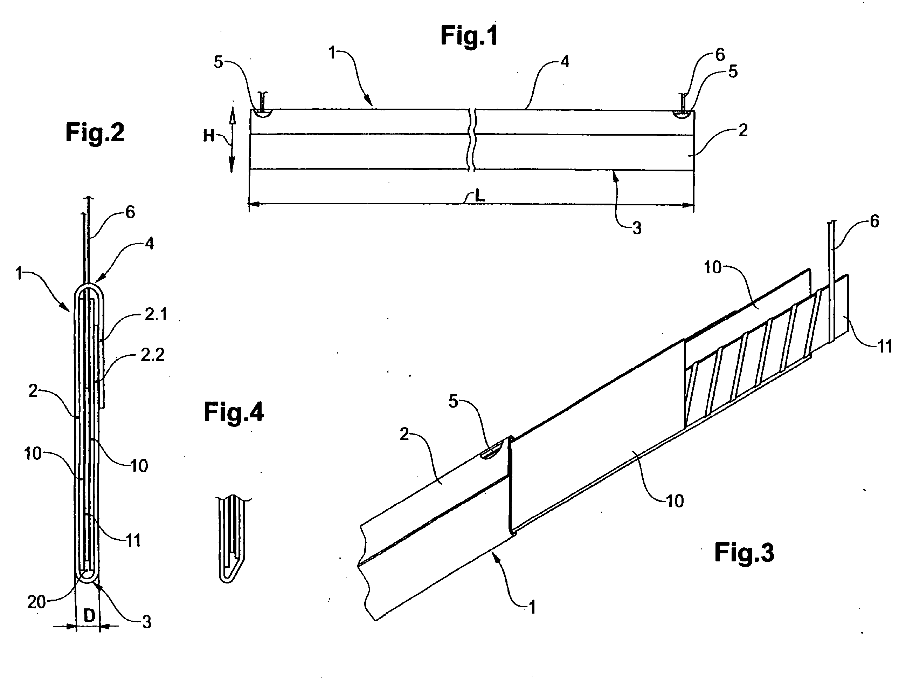

**Figur 1** zeigt eine bevorzugte Ausführungsform des erfindungsgemässen Werkzeugs mit Blickwinkel parallel zur Förderrichtung der mit dem Werkzeug zu bearbeitenden Folien. Das Werkzeug 1 hat eine Länge L, die mindestens der Breite der zu bearbeitenden Folien entspricht, und eine Höhe H von beispielsweise 2 bis 5 cm. Das Mantelblech 2 ist vorteilhafterweise zweimal in derselben Richtung gefaltet, wobei die eine der Faltkanten die Trennkante 3 bildet. An der der Trennkante 3 gegenüberliegenden Faltkante 4 weist das Mantelblech 2 Öffnungen 5 auf, durch die der Heizdraht 6 geführt ist. Auf der in Figur 1 sichtbaren Werkzeugseite überlappen sich die Längskantenbereiche des Mantelblechs und sind gegebenenfalls mit entsprechenden Mitteln miteinander verbunden (z.B. nicht dargestellte Punktschweissungen).

**Figur 2** zeigt das Werkzeugs 1 gemäss Figur 1 im Querschnitt. Gleiche Elemente sind mit gleichen Bezugsziffern bezeichnet wie in Figur 1. In der Figur 2 sind die einander überlappenden Längskantenbereiche 2.1 und 2.2 des Mantelblechs 2 deutlich sichtbar.

Im Innern des zweimal gefalteten Mantelbleches 1 sind zwei Isolierschichten 10 angeordnet und zwischen den Isolierschichten das Heizelement, das im wesentlichen aus einem flachen Träger 11 aus einem elektrisch isolierenden Material und dem um den Träger gewickelten Heizdraht 6 besteht.

**Figur 3** zeigt die Bestandteile des erfindungsgemässen Werkzeugs 1 in einer teilweise explodierten Weise. Daraus ist der auf dem Träger 11 aufgewickelte Heizdraht 6 deutlich ersichtlich.

Wie bereits weiter oben erwähnt, besteht das Mantelblech 2 beispielsweise aus rostfreiem Stahl und hat eine Dicke von ca. 0,4 mm (0,3 bis 0,6 mm). Die beiden Isolierschichten 10 und der Träger 11 bestehen beispielsweise aus Faserzement (im Handel erhältlich z.B. unter dem Handelsnamen "Eternit") und haben eine Dicke in derselben Grössenordnung wie die Dicke des Mantelblechs 2. Die Gesamtdicke D des Werkzeuges kann also so gering wie ca. 2 mm sein, wobei mit den genannten Materialien trotzdem eine für die Funktion des Werkzeuges genügende Stabilität erreicht wird. Die die Trennkante 3 bildende Faltkante des Mantelblechs 2 hat dabei einen äusseren Biegeradius von ca. 1 mm.

Die Isolierschichten 10 und der Träger 11 sind im Mantelblech 2 vorteilhafterweise derart angeordnet, dass im Bereich der Trennkante 3 ein Hohlraum 20 bleibt. Die Isolierschichten 10 und der Träger 11 sind also derart angeordnet, dass ihre gegen die Trennkante 3 gerichteten Längskanten von der Innenfläche des Mantelbleches beabstandet sind, wobei vorteilhafterweise der Abstand zwischen Mantelblech 2 und Längskante für den Träger 11 grösser ist als für die Isolierschichten 10.

Dabei ist es nicht notwendig, dass die Anordnung der Isolierschichten 10 und des Trägers 11 im Bereich der Faltkante des Mantelblechs 2 symmetrisch ist, wie dies in der Figur 2 dargestellt ist. Figur 4 zeigt eine asymmetrische Ausführungsform, in der die Längskante der einen Isolierschicht 10 weiter von der Trennkante 3 beabstandet ist als die Längskante der anderen Isolierschicht 10, wodurch für das Mantelblech 2 ein noch kleinerer Biegeradius (z.B. 0.5 mm) möglich wird.

Das Werkzeug wie es im wesentlichen in den Figuren 1 bis 3 dargestellt ist, kann bei einer Länge L von 50 cm mit einer Heizleistung von nur ca. 200 bis 250 W auf einer Betriebstemperatur von ca. 200 bis 250°C betrieben werden, wobei der Bereich der Trennkante in nur ca. 3 Sekunden auf 200°C aufheizbar ist (in ca. 5 Sekunden auf 280°).

Weitere, beispielhafte Ausführungsformen des erfindungsgemässen Werkzeuges weisen die folgenden Merkmale auf:
- Das Mantelblech ist nur einmal gefaltet und die der Trennkante gegenüberliegende Kante ist mit anderen Mitteln, beispielsweise mit einer Kappe aus Kunststoff, gedeckt oder offen;
- Die Isolierelemente 10 sind nicht als unabhängige Teile ausgebildet sondern als entsprechende Beschichtungen der Innenseite des Mantelblechs;
- Der Heizdraht ist nicht an der der Trennkante gegenüberliegenden Kante sondern seitlich durch das Mantelblech geführt;

## Patentansprüche

1. Werkzeug (1) zum Verschweissen und Trennen von im wesentlichen kontinuierlich geförderten Folien aus einem thermoplastischen Material, welches Werkzeug als elektrisch heizbares Schweiss/Trennelement mit einer Trennkante (3) ausgebildet ist und eine Mehrzahl von Schichten aufweist, wobei zwei äussere Schichten sowie und eine innere Schicht vorhanden sind, wobei die innere Schicht durch einen flachen Träger (11) aus einem elektrisch isolierenden Material gebildet wird und wobei um den Träger (11) ein Heizdraht (6) gewickelt ist, **dadurch gekennzeichnet, dass** die zwei äusseren Schichten durch ein gefaltetes Mantelblech (2) gebildet werden, wobei eine Faltkante des Mantelblechs (2) die Trennkante (3) bildet.

2. Werkzeug nach Anspruch 1, **dadurch gekennzeichnet, dass** zwischen Mantelblech (2) und Träger (11) zwei Isolierschichten (10) aus einem elektrisch isolierenden Material angeordnet sind.

3. Werkzeug nach Anspruch 2, **dadurch gekennzeichnet, dass** das elektrisch isolierende Material Faserzement ist.

4. Werkzeug nach einem der Ansprüche 1 bis 3, **dadurch gekennzeichnet, dass** das Mantelblech (2) aus rostfreiem Stahl besteht.

5. Werkzeug nach einem der Ansprüche 1 bis 4, **dadurch gekennzeichnet, dass** im Bereich der Trennkante (3) zwischen dem Mantelblech (2) und den inneren Schichten ein Hohlraum (20) vorgesehen ist.

6. Werkzeug nach einem der Ansprüche 1 bis 5, **dadurch gekennzeichnet, dass** das Mantelblech (2) eine Dicke zwischen 0,3 bis 0,6 mm aufweist und dass die inneren Schichten Dicken in der gleichen Grössenordnung aufweisen.

7. Werkzeug nach einem der Ansprüche 1 bis 6, **dadurch gekennzeichnet, dass** das Mantelblech (2) zwei mal gefaltet ist, wobei an der der Trennkante (3) gegenüberliegenden Faltkante des Mantelblechs (2) Öffnungen (5) für die Durchführung des Heizdrahtes (6) vorgesehen sind.

8. Verwendung des Werkzeuges nach einem der Ansprüche 1 bis 7 in einer Vorrichtung zur Querverschweissung und Trennung eines Folienschlauches, in dem eine Reihe von voneinander beabstandeten Druckprodukten angeordnet ist.

9. Verwendung nach Anspruch 8, **dadurch gekennzeichnet, dass** das Werkzeug in der Vorrichtung mit einem Förderband kooperiert.

## Claims

1. Tool (1) for heat-sealing and separation of substantially continuously conveyed films made of a thermoplastic material, which tool is an electrically heatable heat-sealing/separating element comprising a separating edge (3) and comprises a plurality of layers, wherein two outer layers and one inner layer are present, wherein the inner layer is formed by a flat support (11) of an electrically insulating material and wherein a heating wire (6) is wound around the support (11), **characterized in that** wherein two outer layers are formed by a folded covering sheet (2), wherein a fold edge of the covering sheet (2) constitutes the separating edge (3).

2. Tool according to claim 1, **characterized in that** between the covering sheet (2) and the support (11) two further inner layers (10) of an electrically insulating material are arranged.

3. Tool according to claim 2, **characterized in that** the electrically insulating material is a fibre-cement.

4. Tool according to any one of claims 1 to 3, **characterized in that** the covering sheet (2) consists of stainless steel.

5. Tool according to any one of claims 1 to 4, **characterized in that**, in the region of the separating edge (3), there is a cavity between the covering sheet (2) and the inner layers.

6. Tool according to any one of claims 1 to 5, **characterized in that** the covering sheet (2) has a thickness of between 0.3 to 0.6 mm and that the inner layers have thicknesses in the same range.

7. Tool according to any one of claims 1 to 6, **characterized in that** the covering sheet (2) is folded twice, wherein on the fold edge opposite the separating edge (3) openings (5) for the heating wire (6) are provided.

8. Use of the tool according to any one of claims 1 to 7 in a device for transverse heat-sealing and separation of a tubular film material, in which a row of mutually distanced printed products is arranged.

9. Use according claim 8, **characterized in that**, in the device, the tool co-operates with a conveying belt.

## Revendications

1. Outil (1) de soudage et de découpe de feuilles de matériau thermoplastique transportées essentiellement en continu, lequel outil est configuré comme élément de soudage et de découpe chauffé électriquement et doté d'une arête de découpe (3),
**caractérisé en ce que**
l'outil présente plusieurs couches, deux couches extérieures étant formées par une tôle d'enveloppe repliée (2), une couche intérieure étant formée d'un support plat (11) en un matériau électriquement isolant, un fil chauffant (6) étant enroulé autour du support (11) et une arête de pliage de la tôle d'enveloppe (2) formant l'arête de séparation (3).

2. Outil selon la revendication 1, **caractérisé en ce que** la tôle d'enveloppe est métallique et **en ce que** deux couches isolantes (10) en matériau électriquement isolant sont disposées entre la tôle d'enveloppe (2) et le support (11).

3. Outil selon l'une des revendications 1 ou 2, **caractérisé en ce que** le matériau électriquement isolant est un ciment additionné de fibres.

4. Outil selon l'une des revendications 1 à 3, **caractérisé en ce que** la tôle d'enveloppe (2) est constituée d'acier inoxydable.

5. Outil selon l'une des revendications 1 à 4, **caractérisé en ce qu'**une cavité (20) est ménagée entre la tôle d'enveloppe (2) et les couches intérieures dans la zone occupée par l'arête de découpe (3).

6. Outil selon l'une des revendications 1 à 5, **caractérisé en ce que** la tôle d'enveloppe (2) présente une épaisseur comprise entre 0,3 et 0,6 mm et **en ce que** les couches intérieures ont des épaisseurs du même ordre de grandeur.

7. Outil selon l'une des revendications 1 à 6, **caractérisé en ce que** la tôle d'enveloppe (2) est repliée deux fois, des ouvertures (5) de passage du fil chauffant (6) étant prévues en face de l'arête de découpe (3) sur l'arête de pliage de la tôle d'enveloppe (2).

8. Utilisation de l'outil selon l'une des revendications 1 à 7 dans un dispositif de soudage transversal et de découpe d'un tube en feuille dans lequel est disposée une série de produits d'imprimerie disposés à distance les uns des autres.

9. Utilisation selon la revendication 8, **caractérisée en ce que** l'outil coopère dans le dispositif avec une bande transporteuse.
